# EUROPÄISCHE PATENTSCHRIFT

(11) **EP 2 356 736 B1**
(45) Veröffentlichungstag und Bekanntmachung des Hinweises auf die Patenterteilung: **30.01.2013**
(21) Anmeldenummer: 08875081.5
(22) Anmeldetag: 09.12.2008
(51) Int. Cl.: H02K 35/00, F03G 7/08

(54) **Generator zur Erzeugung elektrischer Energie aus mechanischen Schwingungen sowie Verfahren zum Einstellen der Resonanzfrequenz eines solchen Generators**
Generator for generating electrical energy from mechanical vibrations, and method for adjusting the resonant frequency of such a generator
Génératrice destinée à produire de l'énergie électrique à partir d'oscillations mécaniques, et procédé de réglage de la fréquence de résonance d'une telle génératrice

(43) Veröffentlichungstag der Anmeldung: 17.08.2011
(73) Patentinhaber: Siemens Aktiengesellschaft, 80333 München (DE)
(72) Erfinder: MAKUTH, Jens, 90537 Feucht (DE); MEHNER, Jan, 09221 Neukirchen (DE); SCHEIBNER, Dirk, 90473 Nürnberg (DE)
(86) Internationale Anmeldenummer: PCT/EP2008/010583
(87) Internationale Veröffentlichungsnummer: WO 2010/066274

(56) Entgegenhaltungen:
- DE-A1-102004 002 910
- GB-A- 2 425 160

## Beschreibung

Autonome, gegebenenfalls vernetzte Sensoren finden zunehmend Verbreitung. Autonom bedeutet hierbei, dass entsprechende Sensoren üblicherweise sowohl zur drahtlosen Kommunikation als auch zur drahtlosen Energieversorgung ausgebildet sind. Während drahtlose Funktechnologien mittlerweile einen hohen technischen Reifegrad erreicht haben, der ihre Anwendung beispielsweise auch im Umfeld industrieller Anlagen, d.h. etwa im Bereich der Industrieautomatisierung, zulässt, ist dies bezüglich einer draht- beziehungsweise kabellosen Energieversorgung bislang noch nicht in entsprechender Weise der Fall. Zwar besteht zum Zwecke der drahtlosen Energieversorgung grundsätzlich die Möglichkeit, Batterien einzusetzen. Aufgrund der begrenzten Lebensdauer von Batterien und des nötigen Wartungsaufwands beim Wechsel der Batterien ist dies jedoch in vielen Fällen mit erheblichen Nachteilen verbunden.

Sowohl im Zusammenhang mit Sensoren beziehungsweise Sensornetzwerken als auch für unterschiedliche andere technischen Geräte und Anwendungen, die auf Autarkie bei der Energieversorgung angewiesen sind, kann es daher zweckmäßig beziehungsweise erforderlich sein, benötigte elektrische Energie aus der Umwelt zu gewinnen. Eine solche Energiegewinnung aus der Umwelt ist insbesondere im Zusammenhang mit vergleichsweise kleinen mit elektrischer Energie zu versorgenden Geräten auch unter dem Begriff "Energy Harvesting" bekannt.

Die vorliegende Erfindung betrifft einen Generator zur Erzeugung elektrischer Energie aus mechanischen Schwingungen, wobei der Generator ein mechanisch schwingfähiges System mit einem Federsystem aufweiset.

Aus dem Dokument DE 10 2004 002 910 ist bereits ein solcher Generator zur Erzeugung elektrischer Energie aus mechanischen Schwingungen bekannt, wobei der Generator ein schwingfähiges System und Mittel zur Änderung der mechanischen Spannung des Federsystems aufweist.

Auch aus der Patentanmeldung GB 2 425 160 ist ein ähnliches System bekannt.

Ein anderer Generator ist beispielsweise aus dem Fachartikel Sensors and Actuators A 110 (2004) 344-349 "An electromagnetic vibration-powered generator for intelligent sensor systems", P. Glynne-Jones, M.J. Tudor, S.P. Beepy, N.M. White bekannt. Dabei dient das mechanisch schwingfähige System zum Erfassen der mechanischen Schwingungen, d.h. als Schwingungsaufnehmer. Neben der aus der genannten Veröffentlichung bekannten Anwendung eines elektrodynamischen Wandlerprinzips sind darüber hinaus aus den in dem in dem Tagungsband XX Eurosensors 2006 veröffentlichten Fachartikeln "A new approach of a MEMS power generator based on a piezoelectric diaphragm", I. Kühne, G. Eckstein, H. Seidel und "Power MEMS - A capacitive vibration-to-electrical energy converter with built-in voltage", I. Kühne, A. Frey, G. Eckstein, H. Seidel auch Generatoren zum Erzeugen elektrischer Energie aus mechanischen Schwingungen unter Anwendung eines piezoelektrischen beziehungsweise eines kapazitiven Wandlerprinzips bekannt.

Generatoren der zuvor genannten Art nutzen üblicherweise eine Resonanzüberhöhung des Generators zur Erhöhung der Energieausbeute, d.h. zur Optimierung der Effizienz der Energieerzeugung beziehungsweise -umwandlung. Nachteil hierbei ist jedoch, dass das mechanisch schwingfähige System des Generators bereits bei seiner Herstellung auf eine bestimmte Resonanzfrequenz auszulegen ist, so dass ein resonanter Betrieb jeweils bereits im Vorhinein die Kenntnis der bei der späteren Verwendung des Generators auftretenden Frequenzen beziehungsweise des auftretenden Frequenzspektrums der mechanischen Schwingungen voraussetzt. Durch diese Einschränkung wird die Nutzung eines Generators im resonanten Betrieb in der Praxis in vielen Fällen verhindert beziehungsweise zumindest erheblich erschwert und verteuert.

Der vorliegenden Erfindung liegt die Aufgabe zugrunde, einen besonders effizienten und zugleich universell und flexibel einsetzbaren Generator zur Erzeugung elektrischer Energie aus mechanischen Schwingungen, wobei der Generator ein mechanisch schwingfähiges System mit einem Federsystem aufweist, anzugeben.

Diese Aufgabe wird erfindungsgemäß gelöst durch einen Generator zur Erzeugung elektrischer Energie aus mechanischen Schwingungen, wobei der Generator ein mechanisch schwingfähiges System mit einem Federsystem sowie Mittel zur Änderung der mechanischen Spannung des Federsystems aufweist.
Der Generator umfasst weiterhin Mittel zur Änderung der mechanischen Spannung des Federsystems wobei die Änderung der mechanischen Spannung des Federsystems mittels eines in einem Ruhezustand selbsthaltenden Mechanismus bewirkt wird die eine Zahnstange sowie ein Klinkensystem umfassen, wobei eine Bewegung der Zahnstange eine Änderung der mechanischen Spannung des Federsystems bewirkt und die Zahnstange in dem Ruhezustand durch zümindest eine Klinke des Klinkensystems in ihrer Position gehalten wird.

Der erfindungsgemäße Generator ist vorteilhaft, da er eine integrierte Möglichkeit zur Resonanzabstimmung aufweist. So wird durch die Mittel zur Änderung der mechanischen Spannung des Federsystems eine Änderung der Resonanzfrequenz des schwingfähigen Systems beziehungsweise des Generators ermöglicht. Dabei macht sich die Erfindung zunutze, dass die Resonanzfrequenz eines schwingfähigen Systems generell durch das Verhältnis von Federsteifigkeit und Masse des Systems bestimmt wird. Vorteilhafterweise kann hierbei durch eine Änderung der mechanischen Spannung des Federsystems des erfindungsgemäßen Generators beziehungsweise Schwingungswandlers somit eine Änderung der Federkonstante und damit auch der Resonanzfrequenz des schwingfähigen Systems bewirkt werden. Dieser Effekt, der auch unter dem Begriff "Stress-Stiffening-Effect" bekannt ist, ist mit dem Stimmen einer Gitarrensaite vergleichbar und beruht darauf, dass Zug- beziehungsweise Druckkräfte in dem Federsystem des mechanisch schwingfähigen Systems eine Erhöhung beziehungsweise Erniedrigung der Federkonstante bewirken.

Dadurch, dass der erfindungsgemäße Generator Mittel zur Änderung der mechanischen Spannung des Federsystems aufweist, ist der Generator in der Lage, sich im laufenden Betrieb auf eine geeignete Arbeitsfrequenz einzustellen. Da der Generator somit nicht jeweils konstruktiv an die Verhältnisse des jeweiligen Anwendungsfalls angepasst zu werden braucht, ist er vorteilhafterweise universell und flexibel einsetzbar. Dies ist insbesondere im Falle eines mikromechanisch hergestellten beziehungsweise ausgebildeten Generators von Bedeutung, da die Kosten für eine Anpassung der Struktur hier im Vergleich zu feinwerktechnisch hergestellten Generatoren sehr hoch liegen.

Der erfindungsgemäße Generator bietet vorteilhafterweise weiterhin die Möglichkeit, einen im Betrieb befindlichen Generator jederzeit an wechselnde Betriebsbedingungen anzupassen. Darüber hinaus ist der Generator vorteilhafterweise zur Änderung der mechanischen Spannung des Federsystems ausgebildet, ohne dass hierfür ein manueller Eingriff erforderlich wäre. Dies ist insbesondere für den Fall von Bedeutung, dass der Einsatz des Generators an schwer erreichbaren oder nicht zugänglichen Orten vorgesehen ist oder ein entsprechender manueller Eingriff beispielsweise aufgrund einer hohen Anzahl verwendeter Generatoren nicht praktikabel ist.

In einer besonders bevorzugten Weiterbildung ist der erfindungsgemäße Generator derart ausgestaltet, dass der Generator mittels der Änderung der mechanischen Spannung des Federsystems zum automatischen Anpassen der Resonanzfrequenz des schwingfähigen Systems an das Frequenzspektrum der mechanischen Schwingungen ausgebildet ist. Dies bietet den Vorteil, dass in Abhängigkeit von dem jeweiligen Frequenzspektrum der mechanischen Schwingungen jeweils automatisch ein Betrieb des Generators mit maximaler Effizienz, d.h. maximaler Energieausbeute, ermöglicht wird. Dabei kann es sich bei dem Frequenzspektrum der mechanischen Schwingungen grundsätzlich um eine bestimmte Frequenz handeln; in der Regel wird das Frequenzspektrum jedoch eine gewisse Breite aufweisen, d.h. mechanische Schwingungen unterschiedlicher Frequenz aufweisen.

In einer weiteren besonders bevorzugten Ausführungsform weist der erfindungsgemäße Generator eine Funkschnittstelle auf und ist zum automatischen Anpassen der Resonanzfrequenz des schwingfähigen Systems an das Frequenzspektrum der mechanischen Schwingungen auf einen empfangen Funkbefehl hin ausgebildet. Dies ist vorteilhaft, da hierdurch beispielsweise seitens einer zentralen Steuereinrichtung eine Aktivierung beziehungsweise ein Anstoßen eines Anpassungsvorgangs der Resonanzfrequenz des schwingfähigen Systems an das Frequenzspektrum der mechanischen Schwingungen ermöglicht wird.

In einer weiteren besonders bevorzugten Ausgestaltung des erfindungsgemäßen Generators sind die Mittel zur Änderung der mechanischen Spannung des Federsystems derart ausgebildet, dass die Änderung der mechanischen Spannung des Federsystems mittels eines in einem Ruhezustand selbsthaltenden Mechanismus bewirkt wird. Dabei wird als Ruhezustand im Rahmen der vorliegenden Erfindung ein Zustand bezeichnet, in dem die mechanische Spannung des Federsystems konstant gehalten wird. Somit benötigt der Generator gemäß der bevorzugten Weiterbildung lediglich zur Änderung der mechanischen Spannung des Federsystems Energie, nicht jedoch zur Aufrechterhaltung einer eingestellten Spannung des Federsystems. Dies hat den Vorteil, dass der Generator im normalen Betrieb keine zusätzliche Energie benötigt, so dass die aus den mechanischen Schwingungen erzeugte elektrische Energie vollständig für die jeweilige Anwendung bereitgestellt werden kann und nicht ganz oder teilweise für den Betrieb des Generators selbst benötigt wird.

Ein entsprechender selbsthaltender Mechanismus kann beispielsweise Rastvorrichtungen unterschiedlicher Art und Ausgestaltung umfassen. So ist der erfindungsgemäße Generator in einer bevorzugten Ausführungsform derart ausgeprägt, dass die Mittel zur Änderung der mechanischen Spannung des Federsystems eine Zahnstange sowie ein Klinkensystem umfassen, wobei eine Bewegung der Zahnstange eine Änderung der mechanischen Spannung des Federsystems bewirkt und die Zahnstange in dem Ruhezustand durch zumindest eine Klinke des Klinkensystems in ihrer Position gehalten wird. Bei einem entsprechenden System aus einer Zahnstange sowie einem Klinkensystem handelt es sich um eine besonders robuste und einfache Ausführungsform eines selbsthaltenden, die Änderung der mechanischen Spannung des Federsystems bewirkenden Mechanismus.

Im Rahmen der zuvor beschriebenen bevorzugten Weiterbildung ist der erfindungsgemäße Generator vorteilhafterweise derart ausgestaltet, dass das Klinkensystem zur Bewegung der Zahnstange zumindest eine weitere Klinke aufweist. Hierdurch wird vorteilhafterweise ein besonders einfacher, im Ruhezustand selbsthaltender Mechanismus zur Änderung der mechanischen Spannung des Federsystems realisiert.

Vorteilhafterweise kann der erfindungsgemäße Generator dabei derart ausgeführt sein, dass das Klinkensystem elektrostatisch, elektromagnetisch oder piezoaktorisch angetrieben ist. Dies ist vorteilhaft, da elektrostatische, elektromagnetische und piezoaktorische Antriebe vergleichsweise kostengünstig herstellbar und insbesondere auch für kleine erforderliche Leistungen realisierbar sind.

Vorteilhafterweise kann der erfindungsgemäße Generator auch derart weitergebildet sein, dass die Mittel zur Änderung der mechanischen Spannung des Federsystems eine Zahnstange sowie einen mittels eines selbsthemmenden Getriebes an die Zahnstange angebundenen Motor umfassen, wobei der Motor zum Bewegen der Zahnstange ausgebildet ist und eine Bewegung der Zahnstange eine Änderung der mechanischen Spannung des Federsystems bewirkt. Hierbei handelt es sich um eine alternative, ebenfalls vergleichsweise robuste und einfache Realisierung eines in einem Ruhezustand selbsthaltenden Mechanismus zur Änderung der mechanischen Spannung des Federsystems.

Vorzugsweise ist der erfindungsgemäße Generator derart weitergebildet, dass die Mittel zur Änderung der mechanischen Spannung des Federsystems zur Erhöhung der durch eine Bewegung der Zahnstange bewirkten Änderung der mechanischen Spannung des Federsystems einen Hebelmechanismus aufweisen. In Abhängigkeit von den jeweiligen Gegebenheiten ist ein entsprechender Hebelmechanismus aufgrund der hierdurch erzielten Erhöhung der durch die Bewegung der Zahnstange bewirkten Änderung der mechanischen Spannung des Federsystems vorteilhaft.

Grundsätzlich kann der Generator auf unterschiedliche Art und Weise hergestellt beziehungsweise ausgeführt werden. Vorteilhafterweise wird der Generator dabei einerseits kostengünstig hergestellt, wobei andererseits insbesondere eine möglichst kleine Bauform des Generators wünschenswert ist, da hierdurch vielfältige Einsatzmöglichkeiten eröffnet werden. In einer besonders bevorzugten Ausführungsform ist der erfindungsgemäße Generator mikromechanisch ausgebildet. Eine solche mikromechanische Ausbildung, etwa in Form eines so genannten mikroelektromechanischen Systems (MEMS, Micro-Electro-Mechanical-System), ist insbesondere aufgrund der vergleichsweise niedrigen Herstellungskosten sowie der hierdurch ermöglichten Miniaturisierung vorteilhaft. Alternativ hierzu kann der erfindungsgemäße Generator vorteilhafterweise jedoch auch feinwerktechnisch ausgebildet sein.

In einer weiteren besonders bevorzugten Ausführungsform ist der erfindungsgemäße Generator zur Erzeugung elektrischer Energie aus mechanischen Schwingungen unter Anwendung eines elektrodynamischen, eines piezoelektrischen oder eines kapazitiven Wandlerprinzips ausgebildet. Dies ist vorteilhaft, da die genannten Prinzipien als solche bewährt sind und damit entsprechende Generatoren in ihrer Herstellung vergleichsweise kostengünstig sowie in ihrem Betrieb vergleichsweise effizient sind.

Die vorliegende Erfindung betrifft darüber hinaus ein Verfahren zum Einstellen der Resonanzfrequenz eines Generators zur Erzeugung elektrischer Energie aus mechanischen Schwingungen.

Hinsichtlich des Verfahrens liegt der vorliegenden Erfindung die Aufgabe zugrunde, ein Verfahren zum Einstellen der Resonanzfrequenz eines Generators zur Erzeugung elektrischer Energie aus mechanischen Schwingungen anzugeben, das eine flexible Anpassung der Resonanzfrequenz des Generators an das Frequenzspektrum der jeweiligen mechanischen Schwingungen ermöglicht.

Diese Aufgabe wird erfindungsgemäß gelöst durch ein Verfahren zum Einstellen der Resonanzfrequenz eines Generators zur Erzeugung elektrischer Energie aus mechanischen Schwingungen, wobei innerhalb eines Abstimmbereichs die Resonanzfrequenz eines mechanisch schwingfähigen Systems des Generators durch eine Änderung der mechanischen Spannung eines Federsystems des mechanisch schwingfähigen Systems geändert wird, der Wert der Resonanzfrequenz des mechanisch schwingfähigen System ermittelt wird, bei dem der Generator mit maximaler Effizienz arbeitet, und die Resonanzfrequenz des mechanisch schwingfähigen Systems auf die ermittelte Frequenz eingestellt wird.

Die Vorteile des erfindungsgemäßen Verfahrens entsprechen im Wesentlichen den zuvor im Zusammenhang mit dem erfindungsgemäßen Generator beziehungsweise den Weiterbildungen des erfindungsgemäßen Generators genannten Vorteilen, so dass diesbezüglich auf die vorstehenden Ausführungen verwiesen wird. Gleiches gilt bezüglich der im Folgenden genannten bevorzugten Weiterbildungen des erfindungsgemäßen Verfahrens hinsichtlich der entsprechenden bevorzugten Weiterbildungen des erfindungsgemäßen Generators.

In einer besonders bevorzugten Ausführung ist das erfindungsgemäße Verfahren derart ausgestaltet, dass die Änderung der mechanischen Spannung des Federsystems mittels eines in einem Ruhezustand selbsthaltenden Mechanismus bewirkt wird.

Vorzugsweise kann das erfindungsgemäße Verfahren auch derart ablaufen, dass durch den Generator ein Funkbefehl empfangen und daraufhin die Resonanzfrequenz des Generators eingestellt wird.

Im Folgenden wird die Erfindung anhand von Ausführungsbeispielen näher erläutert. Hierzu zeigt
- Figur 1: in einer schematischen Skizze ein erstes Ausführungsbeispiel des erfindungsgemäßen Generators mit Mitteln zur Änderung der mechanischen Spannung eines Federsystems eines mechanisch schwingfähigen Systems des Generators,
- Figur 2: einen Ausschnitt eines zweiten Ausführungsbeispiels des erfindungsgemäßen Generators mit ein Klinkensystem aufweisenden Mitteln zur Änderung der mechanischen Spannung des Federsystems,
- Figur 3: einen Ausschnitt eines dritten Ausführungsbeispiels des erfindungsgemäßen Generators mit ein Klinkensystem aufweisenden Mitteln zur Änderung der mechanischen Spannung des Federsystems,
- Figur 4: einen Ausschnitt eines vierten Ausführungsbeispiel des erfindungsgemäßen Generators mit einen Motor sowie ein selbsthemmendes Getriebe aufweisenden Mitteln zur Änderung der mechanischen Spannung des Federsystems,
- Figur 5: einen Ausschnitt eines fünften Ausführungsbeispiel des erfindungsgemäßen Generators mit einen Motor, ein selbsthemmendes Getriebe sowie einen Hebelmechanismus aufweisenden Mitteln zur Änderung der mechanischen Spannung des Federsystems und
- Figur 6: zur Erläuterung eines Ausführungsbeispiels des erfindungsgemäßen Verfahrens ein Frequenzspektrum mechanischer Schwingungen.

Aus Gründen der Übersichtlichkeit sind in den Figuren gleiche oder im Wesentlichen gleich wirkende Komponenten jeweils mit gleichen Bezugszeichen gekennzeichnet.

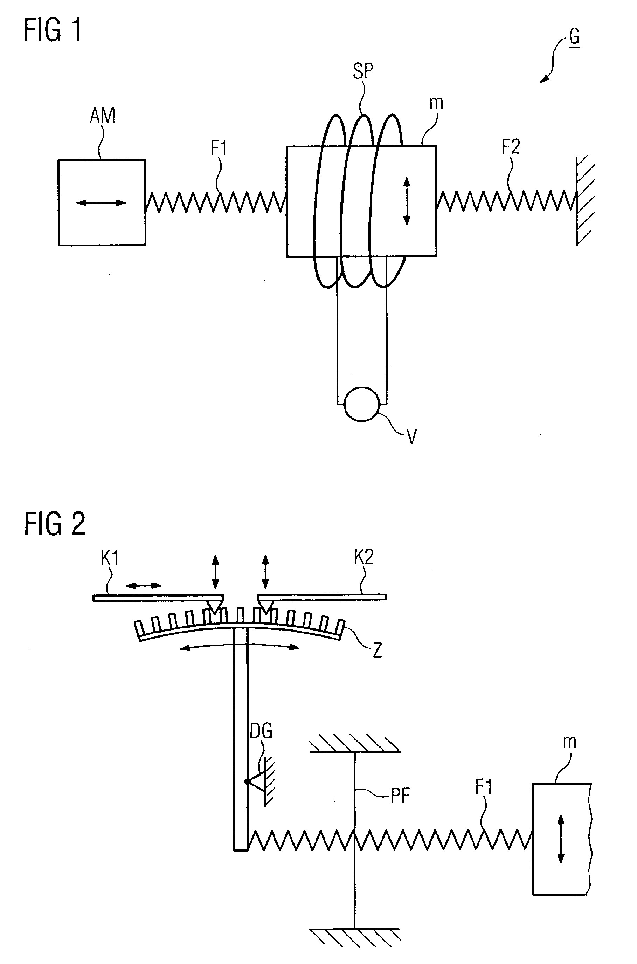

Figur 1 zeigt in einer schematischen Skizze ein erstes Ausführungsbeispiel des erfindungsgemäßen Generators mit Mitteln zur Änderung der mechanischen Spannung eines Federsystems eines mechanisch schwingfähigen Systems des Generators. Dargestellt ist hierbei der prinzipielle Aufbau eines Generators G zur Erzeugung elektrischer Energie aus mechanischen Schwingungen, wobei die Arbeitsfrequenz des Generators G änderbar, insbesondere an das jeweils vorliegende Spektrum der mechanischen Schwingungen anpassbar, ist.

Im Detail weist der Generator G ein mechanisch schwingfähiges System mit einem Federsystem auf, das aus den Federn F1 und F2 besteht. Die Federn F1, F2 dienen zum Erfassen von auf eine Masse m des schwingfähigen Systems einwirkenden mechanischen Schwingungen, wobei die mechanische Energie der Schwingungen mittels einer über die Masse m gewickelten Spule SP unter Verwendung eines elektrodynamischen Wandlerprinzips in elektrische Energie umgewandelt wird. Dabei bewirken die mechanischen Schwingungen in dem in Figur 1 dargestellten Ausführungsbeispiel eine Bewegung beziehungsweise Schwingung der Masse m, die auch als seismische Masse bezeichnet werden kann, in vertikaler Richtung. Eine hierdurch in der Spule SP induzierte Wechselspannung kann von einem Verbraucher V verwendet beziehungsweise abgegriffen werden.

Entsprechend der Darstellung in Figur 1 endet das Federsystem seitens der Feder F1 an einem Zugsystem beziehungsweise Mitteln AM zur Änderung der mechanischen Spannung des Federsystems, durch welche, wie in Figur 1 durch einen entsprechenden Doppelpfeil angedeutet, in horizontaler Richtung Normalkräfte in den Federn F1, F2 erzeugt werden können, die durch den Stress-Stiffening-Effect eine Änderung der mechanischen Spannung des Federsystems und damit eine Veränderung der Federkonstante des aus dem Federsystem sowie der Masse m bestehenden schwingfähigen Systems bewirken. Durch die Mittel AM zur Änderung der mechanischen Spannung des Federsystems wird es somit vorteilhafterweise ermöglicht, die Arbeitsfrequenz beziehungsweise Resonanzfrequenz des Generators G an das jeweils vorliegende Frequenzspektrum der mechanischen Schwingungen anzupassen.

Es sei darauf hingewiesen, dass alternativ zu dem in Figur 1 exemplarisch dargestellten elektromagnetischen Wandlerprinzip ebenso auch andere Wandlerprinzipien zum Einsatz kommen können, so dass der Generator G beispielsweise auch unter Anwendung eines kapazitiven oder piezoelektrischen Wandlerprinzips in entsprechender Weise realisierbar ist. Entscheidend hierbei ist lediglich, dass der Generator G unabhängig von dem verwendeten Wandlerprinzip zur Änderung der mechanischen Spannung des Federsystems ausgebildet ist.

Figur 2 zeigt einen Ausschnitt eines zweiten Ausführungsbeispiels des erfindungsgemäßen Generators mit ein Klinkensystem aufweisenden Mitteln zur Änderung der mechanischen Spannung des Federsystems. Dabei kann es sich bei den gezeigten Komponenten beispielsweise um die in Figur 1 gezeigten Mittel AM zur Änderung der mechanischen Spannung des Federsystems handeln.

Gemäß der Darstellung in Figur 2 ist die Masse m mittels der Feder F1, die durch eine Parallelführung PF geführt wird, mit einer ein Drehgelenk DG aufweisenden Zahnstange Z verbunden. Die Zahnstange Z wird hierbei durch ein Klinkensystem bewegt, wobei eine erste Klinke K1 in Form einer Schaltklinke den Vorschub realisiert während eine zweite Klinke K2 in Form einer Sperrklinke die Zahnstange Z in ihrer jeweiligen Position hält. Die Klinken K1, K2 können zum Beispiel elektrostatisch, elektromagnetisch, d.h. entsprechend dem Prinzip eines Relais, oder auch piezoaktorisch angetrieben werden. Da die Klinken K1, K2 in der Ruhelage im Eingriff sind und die Zahnstange Z in ihrer Position halten, benötigen die Mittel zur Änderung der mechanischen Spannung des Federsystems, d.h. zur Resonanzabstimmung, ausschließlich zur Änderung der mechanischen Spannung des Federsystems Energie. Hingegen wird im Ruhezustand, d.h. zur Aufrechterhaltung einer einmal eingestellten Spannung, keine Energie benötigt.

Eine Bewegung der Zahnstange Z bewirkt über das Drehgelenk DG eine Zug- beziehungsweise Druckkraft in der Feder F1 des schwingfähigen Systems und führt somit zu einer Änderung der mechanischen Spannung des Federsystems des Generators. Dies hat entsprechend den vorstehenden Erläuterungen eine Beeinflussung, d.h. Änderung, der Resonanzfrequenz des mechanisch schwingfähigen Systems zur Folge.

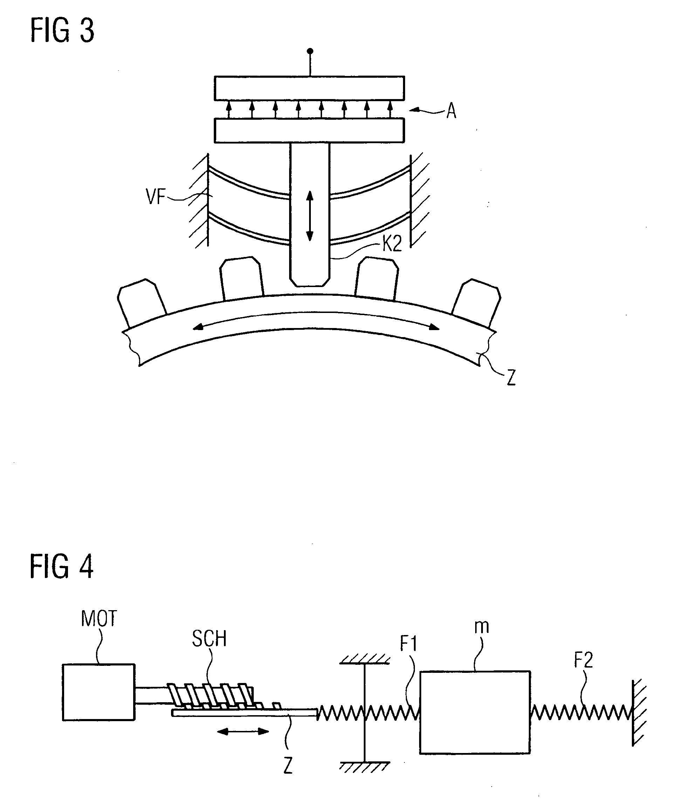

Figur 3 zeigt einen Ausschnitt eines dritten Ausführungsbeispiels des erfindungsgemäßen Generators mit ein Klinkensystem aufweisenden Mitteln zur Änderung der mechanischen Spannung des Federsystems. Dargestellt ist hierbei ein Detail einer möglichen Realisierung der in Figur 2 dargestellten Mittel zur Änderung der mechanischen Spannung des Federsystems des Generators. Dabei befindet sich die Klinke K2 entsprechend der Darstellung in Figur 3 aufgrund vorgespannter Federn VF im Ruhezustand permanent im Eingriff mit den Zähnen der Zahnstange Z. Zum Verstellen der Zahnstange Z, d.h. zum Ändern der mechanischen Spannung des Federsystems des Generators, wird über eine externe Kraft, die durch einen elektrostatischen Antrieb A gewirkt wird, die Klinke K2 gezogen.

Entsprechend der Beschreibung im Zusammenhang mit Figur 2 sind alternativ jedoch auch andere Ausführungen des Antriebs denkbar.

Figur 4 zeigt einen Ausschnitt eines vierten Ausführungsbeispiels des erfindungsgemäßen Generators mit einen Motor sowie ein selbsthemmendes Getriebe aufweisenden Mitteln zur Änderung der mechanischen Spannung des Federsystems. Dargestellt sind Mittel zur Änderung der mechanischen Spannung des Federsystems, die im Unterschied zu dem in Figur 2 dargstellten Mechanismus einen Mikromotor MOT mit einem selbsthemmenden Getriebe und einer Zahnstange nutzen, um eine Zugkraft in dem Federsystem F1, F2 des schwingfähigen Systems zu realisieren. Das selbsthemmende Getriebe weist eine Schnecke SCH auf, die im Ruhezustand derart mit der Zahnstange Z zusammenwirkt, dass der vorliegende Zugzustand beziehungsweise die bestehende Spannung des Federsystems ohne Energiezufuhr erhalten bleibt. Eine Realisierung entsprechend der Darstellung der Figur 4 bietet sich insbesondere im Falle einer feinwerktechnischen Ausbildung des Generators G an.

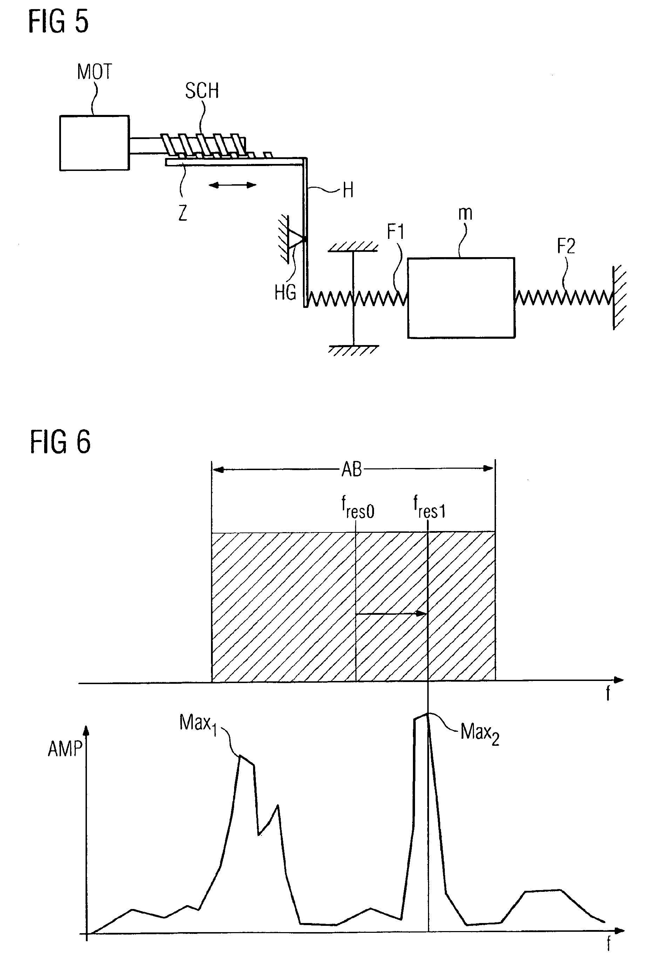

Figur 5 zeigt einen Ausschnitt eines fünften Ausführungsbeispiels des erfindungsgemäßen Generators mit einen Motor, ein selbsthemmendes Getriebe sowie einen Hebelmechanismus aufweisenden Mitteln zur Änderung der mechanischen Spannung des Federsystems. Dabei entsprechen die dargestellten Mittel zur Änderung der mechanischen Spannung des Federsystems F1, F2 im Wesentlichen denjenigen der Figur 4, wobei zusätzlich zur Erhöhung der Kraftwirkung ein Hebelmechanismus vorgesehen ist, der einen Hebel H sowie ein Hebelgelenk HG umfasst. Hierdurch wird vorteilhafterweise eine Anpassung der durch die Bewegung der Zahnstange Z bewirkten Änderung der mechanischen Spannung des Federsystems F1, F2 an die jeweiligen Anforderungen beziehungsweise Gegebenheiten ermöglicht.

Figur 6 zeigt zur Erläuterung eines Ausführungsbeispiels des erfindungsgemäßen Verfahrens ein Frequenzspektrum mechanischer Schwingungen. Dargestellt ist hierbei die Amplitude der mechanischen Schwingungen AMP als Funktion ihrer Frequenz f. Das Einstellen der Resonanzfrequenz eines Generators zur Erzeugung elektrischer Energie aus mechanischen Schwingungen kann nun derart erfolgen, dass innerhalb eines Abstimmbereichs AB die Resonanzfrequenz eines mechanisch schwingfähigen Systems des Generators durch eine Änderung der mechanischen Spannung eines Federsystems des mechanisch schwingfähigen Systems verändert wird. Dies bedeutet, dass der Generator beziehungsweise Energiewandler einen Abstimmbereich AB besitzt, in dem er seine Resonanzfrequenz mittels eines integrierten Abstimmmechanismus selbstständig beziehungsweise automatisch durchstimmt. Dabei wird die Frequenz mit dem maximalen Energiegewinn ermittelt, d.h. diejenige Frequenz, bei der der Generator mit maximaler Effizienz arbeitet. In dem Ausführungsbeispiel der Figur 6 wird hierbei die Resonanzfrequenz des Generators im Ergebnis von der unabgestimmten Frequenz fᵣₑₛ₀ durch den Abstimmmechanismus auf die abgestimmte Frequenz fres₁ verschoben und anschließend für den weiteren Betrieb des Generators durch die Aufrechterhaltung der entsprechenden mechanischen Spannung des Federsystems des Generators dort gehalten. Eine Steuerung des Abstimmverfahrens erfolgt vorzugsweise durch eine Steuereinrichtung des Generators, die beispielsweise in Form eines Mikroprozessors ausgeführt sein kann.

Entsprechend den vorstehend beschriebenen Ausführungsbeispielen bieten der erfindungsgemäße Generator sowie das erfindungsgemäße Verfahren insbesondere den Vorteil, dass eine flexible Anpassung der Arbeits- beziehungsweise Resonanzfrequenz des Generators beziehungsweise des schwingfähigen Systems des Generators an die jeweils vorliegenden mechanischen Schwingungen ermöglicht wird. Hierdurch wird die Energieausbeute des Generators maximiert, ohne dass hierfür ein manueller Eingriff erforderlich wäre. Dies ermöglicht es, einen entsprechenden Generator universell für unterschiedliche Anwendungen einzusetzen, wodurch sich die Herstellungskosten für einen solchen Generator aufgrund einer Vergrößerung der jeweiligen Stückzahl erheblich verringern. Die Änderung der mechanischen Spannung des Federsystems des Generators kann vorteilhafterweise mittels eines in einem Ruhezustand selbsthaltenden Mechanismus bewirkt werden, so dass im normalen Betrieb des Generators zur Aufrechterhaltung einer eingestellten mechanischen Spannung des Federsystems keine Energie benötigt wird.

## Patentansprüche

1. Generator (G) zur Erzeugung elektrischer Energie aus mechanischen Schwingungen, wobei der Generator (G) ein mechanisch schwingfähiges System mit einem Federsystem (F1, F2) aufweist, wobei
der Generator (G) Mittel (AM) zur Änderung der mechanischen Spannung des Federsystems (F1, F2) aufweist und
die Mittel (AM) zur Änderung der mechanischen Spannung des Federsystems (F1, F2) derart ausgebildet sind, dass die Änderung der mechanischen Spannung des Federsystems (F1, F2) mittels eines in einem Ruhezustand selbsthaltenden Mechanismus bewirkt wird
**dadurch gekennzeichnet, dass**
die Mittel (AM) zur Änderung der mechanischen Spannung des Federsystems (F1, F2) eine Zahnstange (Z) sowie ein Klinkensystem (K1, K2) umfassen, wobei eine Bewegung der Zahnstange (Z) eine Änderung der mechanischen Spannung des Federsystems (F1, F2) bewirkt und die Zahnstange (Z) in dem Ruhezustand durch zumindest eine Klinke (K2) des Klinkensystems (K1, K2) in ihrer Position gehalten wird.

2. Generator nach Anspruch 1,
**dadurch gekennzeichnet, dass**
der Generator (G) mittels der Änderung der mechanischen Spannung des Federsystems (F1, F2) zum automatischen Anpassen der Resonanzfrequenz des schwingfähigen Systems an das Frequenzspektrum der mechanischen Schwingungen ausgebildet ist.

3. Generator nach Anspruch 2,
**dadurch gekennzeichnet, dass**
der Generator (G) eine Funkschnittstelle aufweist und zum automatischen Anpassen der Resonanzfrequenz des schwingfähigen Systems an das Frequenzspektrum der mechanischen Schwingungen auf einen empfangenen Funkbefehl hin ausgebildet ist.

4. Generator nach einem der vorangehenden Ansprüche,
**dadurch gekennzeichnet, dass**
das Klinkensystem (K1, K2) zur Bewegung der Zahnstange zumindest eine weitere Klinke (K1) aufweist.

5. Generator nach einem der vorangehenden Ansprüche,
**dadurch gekennzeichnet, dass**
das Klinkensystem (K1, K2) elektrostatisch, elektromagnetisch oder piezoaktorisch angetrieben ist.

6. Generator nach einem der vorangehenden Ansprüche,
**dadurch gekennzeichnet, dass**
die Mittel (AM) zur Änderung der mechanischen Spannung des Federsystems (F1, F2) eine Zahnstange (Z) sowie einen mittels eines selbsthemmenden Getriebes (SCH) an die Zahnstange (Z) angebundenen Motor (MOT) umfassen, wobei der Motor (MOT) zum Bewegen der Zahnstange (Z) ausgebildet ist und eine Bewegung der Zahnstange (Z) eine Änderung der mechanischen Spannung des Federsystems (F1, F2) bewirkt.

7. Generator nach Anspruch 6,
**dadurch gekennzeichnet, dass**
die Mittel (AM) zur Änderung der mechanischen Spannung des Federsystems (F1, F2) zur Erhöhung der durch eine Bewegung der Zahnstange (Z) bewirkten Änderung der mechanischen Spannung des Federsystems (F1, F2) einen Hebelmechanismus (H, HG) aufweisen.

8. Generator nach einem der vorangehenden Ansprüche,
**dadurch gekennzeichnet, dass**
der Generator (G) mikromechanisch ausgebildet ist.

9. Generator nach einem der vorangehenden Ansprüche,
**dadurch gekennzeichnet, dass**
der Generator (G) feinwerktechnisch ausgebildet ist.

10. Generator nach einem der vorangehenden Ansprüche,
**dadurch gekennzeichnet, dass**
der Generator (G) zur Erzeugung elektrischer Energie aus mechanischen Schwingungen unter Anwendung eines elektrodynamischen, eines piezoelektrischen oder eines kapazitiven Wandlerprinzips ausgebildet ist.

11. Verfahren zum Einstellen der Resonanzfrequenz eines Generators (G) zur Erzeugung elektrischer Energie aus mechanischen Schwingungen gemäß einem der Patentansprüche 1 bis 10, wobei
- innerhalb eines Abstimmbereichs die Resonanzfrequenz eines mechanisch schwingfähigen Systems des Generators (G) durch eine Änderung der mechanischen Spannung eines Federsystems (F1, F2) des mechanisch schwingfähigen Systems geändert wird,
- der Wert der Resonanzfrequenz des mechanisch schwingfähigen System ermittelt wird, bei dem der Generator (G) mit maximaler Effizienz arbeitet, und
- die Resonanzfrequenz des mechanisch schwingfähigen Systems auf die ermittelte Frequenz eingestellt wird.

12. Verfahren nach Anspruch 11,
**dadurch gekennzeichnet, dass**
die Änderung der mechanischen Spannung des Federsystems (F1, F2) mittels eines in einem Ruhezustand selbsthaltenden Mechanismus bewirkt wird.

13. Verfahren nach Anspruch 11 oder 12,
**dadurch gekennzeichnet, dass**
durch den Generator ein (G) Funkbefehl empfangen und daraufhin die Resonanzfrequenz des Generators (G) eingestellt wird.

## Claims

1. Generator (G) for generating electrical energy from mechanical vibrations, wherein the generator (G) has a system capable of mechanical vibration with a spring system (F1, F2), wherein
the generator (G) has means (AM) for changing the mechanical tension of the spring system (F1, F2) and the means (AM) for changing the mechanical tension of the spring system (F1, F2) are embodied such that the change to the mechanical tension of the spring system (F1, F2) is brought about by means of a mechanism which is self-retaining in a state of rest **characterised in that**
the means (AM) for changing the mechanical tension of the spring system (F1, F2) comprise a toothed bar (Z) as well as a pawl system (K1, K2), wherein a movement of the toothed bar (Z) brings about a change in the mechanical tension of the spring system (F1, F2) and the toothed bar (Z) is held in its position in the state of rest by at least one pawl (K2) of the pawl system (K1, K2).

2. Generator according to claim 1,
**characterised in that**
the generator (G) is embodied by means of the change in the mechanical tension of the spring system (F1, F2) for automatic adaptation of the vibrating system to the frequency spectrum of the mechanical vibrations.

3. Generator according to claim 2,
**characterised in that**
the generator (G) has a radio interface and is embodied for automatically adapting the resonant frequency of the vibrating system to the frequency spectrum of the mechanical vibrations in response to a received wireless command.

4. Generator according to one of the preceding claims,
**characterised in that**
the pawl system (K1, K2) features at least one further pawl (K1) for moving the toothed bar.

5. Generator according to one of the preceding claims,
**characterised in that**
the pawl system (K1, K2) is driven electrostatically, electromagnetically or piezo-actuatably.

6. Generator according to one of the preceding claims,
**characterised in that**
the means (AM) for changing the mechanical tension of the spring system (F1, F2) comprise a toothed bar (Z) as well as a motor (MOT) connected by means of a self-inhibiting transmission (SCH) to the toothed bar (Z), with the motor (MOT) being embodied for moving the toothed bar (Z) and a movement of the toothed bar (Z) bringing about a change to the mechanical tension of the spring system (F1, F2).

7. Generator according to claim 6,
**characterised in that**
the means (AM) for changing the mechanical tension of the spring system (F1, F2) feature a lever mechanism (H, HG) for increasing the change to the mechanical tension of the spring system (F1, F2) brought about by a movement of the toothed bar (Z) .

8. Generator according to one of the preceding claims,
**characterised in that**
the generator (G) is embodied micromechanically.

9. Generator according to one of the preceding claims
**characterised in that**
the generator (G) is embodied in precision mechanics.

10. Generator according to one of the preceding claims,
**characterised in that**
the generator (G) is embodied for generating electrical energy from mechanical vibrations using an electrodynamic, a piezoelectric or a capacitive converter principle.

11. Method for adjusting the resonant frequency of a generator (G) for generating electrical energy from mechanical vibrations according to one of claims 1 to 10, wherein
- the resonant frequency of a mechanically vibrating system of the generator (G) is changed within a tuning range by an change in the mechanical tension of a spring system (F1, F2) of the mechanically vibrating system,
- the value of the resonant frequency of the mechanically vibrating system is determined at which the generator (G) operates at maximum efficiency, and
- the resonant frequency of the mechanically vibrating system is adjusted to the frequency determined.

12. The method as claimed in claim 11,
**characterised in that**
the change in the mechanical tension of the spring system (F1, F2) is brought about by a mechanism which is self-retaining in a state of rest.

13. The method as claimed in claim 11 or 12
**characterised in that**
a wireless command is received by the generator (G) and the resonant frequency of the generator (G) is adjusted in response.

## Revendications

1. Génératrice (G) destinée à produire de l'énergie électrique à partir d'oscillations mécaniques, la génératrice (G) comprenant un système apte à osciller mécaniquement doté d'un système à ressort (F1, F2),
la génératrice (G) comprenant des moyens (AM) de modification de la tension mécanique du système à ressort (F1, F2), et
les moyens (AM) de modification de la tension mécanique du système à ressort (F1, F2) étant conçus de telle façon que la modification de la tension mécanique du système à ressort (F1, F2) est engendrée par l'intermédiaire d'un mécanisme autobloquant à l'état de repos,
**caractérisée en ce que**
les moyens (AM) de modification de la tension mécanique du système à ressort (F1, F2) comprennent une crémaillère (Z) ainsi qu'un système à cliquet (K1, K2), un déplacement de la crémaillère (Z) ayant pour effet une modification de la tension mécanique du système à ressort (F1, F2) et la crémaillère (Z), à l'état de repos, étant maintenue dans sa position par au moins un cliquet (K2) du système à cliquet (K1, K2).

2. Génératrice selon la revendication 1,
**caractérisée en ce que**
la génératrice (G), au moyen de la modification de la tension mécanique du système à ressort (F1, F2), est conçue pour adapter automatiquement la fréquence de résonance du système apte à osciller au spectre de fréquence des oscillations mécaniques.

3. Génératrice selon la revendication 2,
**caractérisée en ce que**
la génératrice (G) comprend une interface radio et est conçue pour adapter automatiquement la fréquence de résonance du système apte à osciller au spectre de fréquence des oscillations mécaniques à la suite d'un ordre radio reçu.

4. Génératrice selon l'une des revendications précédentes,
**caractérisée en ce que**
le système à cliquet (K1, K2) permettant de déplacer la crémaillère comprend au moins un autre cliquet (K1).

5. Génératrice selon l'une des revendications précédentes,
**caractérisée en ce que**
le système à cliquet (K1, K2) est entraîné de manière électrostatique, électromagnétique ou piézoélectrique.

6. Génératrice selon l'une des revendications précédentes,
**caractérisée en ce que**
les moyens (AM) de modification de la tension mécanique du système à ressort (F1, F2) comprennent une crémaillère (Z) ainsi qu'un moteur (MOT) relié à la crémaillère (Z) par l'intermédiaire d'un engrenage à blocage automatique (SCH), le moteur (MOT) étant conçu pour déplacer la crémaillère (Z) et un déplacement de la crémaillère (Z) ayant pour effet une modification de la tension mécanique du système à ressort (F1, F2).

7. Génératrice selon la revendication 6,
**caractérisée en ce que**
les moyens (AM) de modification de la tension mécanique du système à ressort (F1, F2) comprennent un mécanisme à levier (H, HG) pour augmenter la modification de la tension mécanique du système à ressort (F1, F2) engendrée par un déplacement de la crémaillère (Z).

8. Génératrice selon l'une des revendications précédentes,
**caractérisée en ce que**
la génératrice (G) est réalisée selon un procédé micromécanique.

9. Génératrice selon l'une des revendications précédentes,
**caractérisée en ce que**
la génératrice (G) est réalisée selon un procédé de mécanique de précision.

10. Génératrice selon l'une des revendications précédentes,
**caractérisée en ce que**
la génératrice (G) destinée à produire de l'énergie électrique à partir d'oscillations mécaniques est réalisée en employant un principe de transducteur électrodynamique, de transducteur piézoélectrique ou de transducteur capacitif.

11. Procédé de réglage de la fréquence de résonance d'une génératrice (G) destinée à produire de l'énergie électrique à partir d'oscillations mécaniques selon l'une des revendications 1 à 10, consistant à
- modifier, à l'intérieur d'une gamme d'accord, la fréquence de résonance (G) d'un système apte à osciller mécaniquement par une modification de la tension mécanique d'un système de la génératrice (G) à ressort (F1, F2) du système apte à osciller mécaniquement,
- déterminer la valeur de la fréquence de résonance du système apte à osciller mécaniquement à laquelle la génératrice (G) fonctionne avec une efficacité maximale, et
- régler la fréquence de résonance du système apte à osciller mécaniquement sur la fréquence déterminée.

12. Procédé selon la revendication 11,
**caractérisé en ce que**
la modification de la tension mécanique du système à ressort (F1, F2) est engendrée par l'intermédiaire d'un mécanisme autobloquant à l'état de repos.

13. Procédé selon la revendication 11 ou 12,
**caractérisé en ce que**
un ordre radio est reçu par la génératrice (G) puis il est procédé au réglage de la fréquence de résonance de la génératrice (G).
